# EUROPEAN PATENT SPECIFICATION

(11) **EP 2 372 946 B1**
(45) Date of publication and mention of the grant of the patent: **16.01.2019**
(21) Application number: 09834039.1
(22) Date of filing: 16.09.2009
(51) Int. Cl.: H04L 29/06, G06F 21/33, H04L 9/32, H04L 12/28

(54) **KEY CERTIFICATE GENERATION METHOD AND SYSTEM USED FOR HOME GATEWAY**
VERFAHREN ZUR ERZEUGUNG VON SCHLÜSSELZERTIFIKATEN UND ENTSPRECHENDES SYSTEM FÜR EIN HEIM-GATEWAY
PROCÉDÉ DE GÉNÉRATION D'UN CERTIFICAT D'ACCÈS ET SYSTÈME UTILISÉ POUR UNE PASSERELLE INTERNE

(30) Priority: 26.12.2008 CN 200810246871
(43) Date of publication of application: 05.10.2011
(73) Proprietor: ZTE Corporation, Shenzhen, Guangdong 518057 (CN)
(72) Inventor: JI, Shengyu, Guangdong 518057 (CN)
(74) Representative: Ilgart, Jean-Christophe
(86) International application number: PCT/CN2009/073959
(87) International publication number: WO 2010/072086

(56) References cited:
- WO-A1-2007/142566
- WO-A1-2008/002081
- CN-A- 1 788 460
- JP-A- 2006 013 757
- BAEHYO PARK ET AL.: "Research on Issuing a certificate and Generating a private key of a Home-gateway." In: "Proceedings of the 4th WSEAS Int. Conf. on Information Security, Communications and Computers. December 16-18, 2005", 18 December 2005 (2005-12-18), XP002694068, pages 169-172, * the whole document *
- JAMES DAHL CABLELABS USA: "Draft revised ITU-T Recommendation J.192 â A residential gateway to support the delivery of cable data services (Annex A to TD42: Report of interim activities of Question 10/9);TD 043", ITU-T DRAFTS ; STUDY PERIOD 2005-2008, INTERNATIONAL TELECOMMUNICATION UNION, GENEVA ; CH, vol. Study Group 9 ; 10/9, 17 January 2005 (2005-01-17), pages 1-370, XP017557993,
- Cisco: "Cisco Broadband Access Center Administrator's Guide", , 2006, XP002691699, Retrieved from the Internet: URL:http://www.cisco.com/en/US/docs/net_mg mt/broadband_access_center/30/administrati on/guide/BAC30adm.pdf [retrieved on 2013-02-06]
- JONGHYUN BAEK KISA KOREA: "ITU-T Final Draft Recommendation of X.homesec-2 : Device certificate profile for the home network;TD 2622 (WP 2/17)", ITU-T DRAFTS ; STUDY PERIOD 2005-2008, INTERNATIONAL TELECOMMUNICATION UNION, GENEVA ; CH, vol. Study Group 17 ; 9/17, 19 April 2007 (2007-04-19), pages 1-15, XP017545848,
- "TR-069 CPE WAN Management Protocol v1.1 Issue 1 Amentment 2", BROADBAND FORUM TECHNICAL REPORT,, no. 1 amendment 2, 1 December 2007 (2007-12-01), pages 1-138, XP002493850,
- 'Proceedings of the 4th WSEAS Int. Conf. on Information Security, Communications and Computers. December 16-18, 2005', deel BAEHYO PARK ET AL.: 'Research on Issuing a certificate and Generating a private key of a Home-gateway.', pages 169 - 172, XP002694068

## Description

### Field of the Invention

The present invention relates to network security technology field, in particular to a method and system for generating a key certificate used for a home gateway.

### Background of the Invention

As the rapid development of internet, various network services outspread rapidly, and besides traditional service of Internet webpage browse, the network services further comprise other services, such as, IPTV (Internet Protocol Television), IP telephone, etc.. Currently, a user who wants getting online needs to use a plurality of equipments, such as a modem, a wideband router and a home gateway, etc. However, in practice, due to the continuous expansion of network services, users are required to perform increasing configuration of equipments, and an equipment operator is required to configure home gateways and upgrade software through operator's server to achieve the object of increasing new services. Whereas, because there is no security authentication mechanism between the operator's server and the home gateway, which results in a security risk during the communication between the operator's server and the home gateway, for example, the home gateway is maliciously controlled and the home gateway is illegally accessed, and so on.

Document BAEHYO PARK ET AL.: "Research on Issuing a certificate and generating a private key of a Home-gateway".

In: "Proceedings of the 4th WSEAS Int. Conf. on Information Security, Communications and Computers. December 16-18, 2005", pages 169-172, describes a certificate issuing and management methods for a home-gateway's public key certificate, and specified generating and storing location of a private key for a home-gateway. Home gateway's certificates are issued online or offline with an aid of the PKI entities by human user's involvement. Home-gateway's without full equipment of certificate issuing and management can be assisted by home gateway administrative server. As for the generating location of a private key, a home-gateway, an administrative server, and a smart card are the choices for generating a private key as well as storing and operating the private key for authentication service of HG.

Document JAMES DAHL CABLELABS USA: "Draft revised ITU-T Recommendation J. 192 â A residential gateway to support the delivery of cable data services (Annex A to TD42 : Report of interim activities of Question 10/9) ; TD 043", ITU-T DRAFTS; STUDY PERIOD 2005-2008, INTERNATIONAL TELECOMMUNICATION UNION, GENEVA; CH, vol. Study Group 9; 10/9, 17 January 2005 (2005-01-17), pages 1-370, XP017557993, [retrieved on 2006-05-03] disclose recommendation that creates a Residential Gateway by providing a set of IP based features that may be added to a Cable Modem or incorporated into a stand alone device. This will enable cable operators to provide an additional set of enhanced home network based services to their customers including support for Quality of Service (QoS), device and service discovery, enhanced security, firewall management, home network focused management and provisioning features, managed network address translation, improved addressing and packet handling and LAN device diagnostics. This Recommendation is based upon the architectural frameworks defined in recommendation J.190.

Document CISCO: "Cisco Broadband Access Center Administrator's Guide", 2006, Retrieved from the Internet: URL:http://www.cisco.com/en/US/docs/net_mgmt/broadband_ac cess_center/30/administration/guide/BAC30adm.pdf [retrieved on 2013-02-06] discloses a CPE management in which BAC communicates with CPE through the CPE Wan Management Protocol (CWMP) according to parameters described in the TR-069 and other related data model specifications. CWMP encompasses secure management of CPE, including:
- autoconfiguration and dynamic service provisioning,
- firmware management,
- device diagnostics,
- performance and status monitoring.

BAC supports devices based on the TR-069, TR-098, TR-104 and TR-106 standards. This support includes Ethernet and ADSL gateway devices, wireless gateways, VoIP ATAs, and other devices compliant with CWMP. This release also provides for runtime-extensible data models to support any upcoming data-model standards or any vendor-specific data models.

Document JONGHYUN BAEK KISA KOREA: "ITU-T Final Draft Recommendation of X. homesec-2: Device certificate profile for the home network; TD 2622 (WP 2/17)", ITU-T DRAFTS; STUDY PERIOD 2005-2008, INTERNATIONAL TELECOMMUNICATION UNION, GENEVA; CH, vol. Study Group 17; 9/17, 19 April 2007 (2007-04-19), pages 1-15, XP017545848, [retrieved on 2007-04-19] discloses a device certificate management procedure in which:
- Illegal downloading of software to the secure home gateway by external intruders should be prevented. The authentication of the home gateway is very important, because the home gateway plays meditation functions for all devices in home network. In particular, the confidential information in secure home gateway should be protected.
- In some cases, the manufacturers of home device possibly embedded certificate in their devices in the beginning of production.
- Once a certificate is installed, the home device should be able to certify other devices using the device certificate all the time.

Document "TR-069 CPE WAN Management Protocol v1.1 Issue 1 Amentment 2", BROADBAND FORUM TECHNICAL REPORT, no. 1 amendment 2, 1 december 2007 (2007-12-01), pages 1-138, XP002493850, discloses the CPE WAN Management Protocol intended for communication between a CPE and Auto-Configuration Server (ACS). The CPE WAN Management Protocol defines a mechanism that encompasses secure auto-configuration of a CPE, and also incorporates other CPE management functions into a common framework.

This document specifies the generic requirements of the management protocol methods which can be applied to any TR-069 CPE. Other documents specify the managed objects, or data models, for specific types of devices or services.

### Summery of the Invention

Considering the above problem, one object of the present invention is to provide a method and a system for generating a key certificate used for a home gateway to ensure the communication security between the home gateway and operator server.

In order to realize the above object, the solution of the present invention is defined by the independent claims 1 and 6.

According to one aspect of the present invention, there is provided a system for generating a key certificate used for a home gateway.

The system for generating a key certificate used for a home gateway according to the present invention comprises a management terminal, a product-like data acquisition terminal, a key certificate management server and an encryption machine, wherein,
the management terminal, configured to submit a request for generating a root key and a root certificate, to submit a request for generating a key of version signature, to submit a request for exporting the root certificate, and to acquire the exported root certificate;
the product-like data acquisition terminal, configured to submit a request for version data and the version signature, and to acquire signed version data; to submit individualized data of the home gateway, to submit a request for generating a key and a certificate of the home gateway and a request for exporting data of a public key corresponding to a private key of signature, and to acquire the key and the certificate of the home gateway, and data of the public key corresponding to the private key of the version signature;
the key certificate management server, configured to receive and respond the requests from the management terminal and the product-like data acquisition terminal, to notify an encryption machine to perform operations of generating the key and the signature according to the requests, and to perform operation of generating the certificate according to the requests; and
the encryption machine, configured to generate the key and the signature, to save the key, and to return identifiers corresponding to the root key and the key of the version signature and the signature to the key certificate management server; and to return the key of the home gateway to the key certificate management server directly.

The management terminal further comprises:
a first request submission module, configured to submit the request for generating the root key and the root certificate to the key certificate management server, to submit the request for generating the key of the version signature, and to submit the request for exporting the root certificate; and
a root certificate export module, configured to acquire the root certificate exported from the key certificate management server.

The product-like data acquisition terminal further comprises:
a second request submission module, configured to submit the individualized data of the home gateway to the key certificate management server, to submit the request for generating the key and the certificate of the home gateway and the request for exporting the data of the public key corresponding to the private key of the version signature, and to submit the request of the version data and the version signature; and
a data acquisition module, configured to acquire the key and the certificate of the home gateway, and to acquire the signed version data, and the public key corresponding to the private key of the version signature.

The key certificate management server further comprises:
a request receiving module, configured to receive the requests from the management terminal and the product-like data acquisition terminal;
a key certificate generation module, configured to interact with the encryption machine according to the requests, to acquire the identifier of the generated root key and a version key, the data of public and private keys of the home gateway, to acquire public key of the root and the data of the public key corresponding to the private key of the version signature according to an identifier of the public key, to acquire signed data, and to generate the certificate according to the requests;
a response module, configured to respond the request , to provide the generated root certificate to the management terminal, to provide the generated key and the certificate of the home gateway, the public key corresponding to the private key of the version signature and the signed version data to the product-like data acquisition terminal; and
a management module, configured to manage the identifier corresponding to the generated key, the certificate, operator configuration information, user permission, and operation log.

The encryption machine further comprises:
an encryption module, configured to perform the operation of generating the key and the signature, and to save the key; and
an interaction module, configured to interact with the key certificate management server, to return the identifiers corresponding to the root key and the key of the version signature and the signature to the key certificate management server; and to return the key of the home gateway to the key certificate management server directly.

According to another aspect of the present invention, there is further provided a method for generating a key certificate used for a home gateway.

The method for generating a key certificate used for a home gateway according to the present invention comprises:
a key certificate management server interacting with an encryption machine to generate a root key and a root certificate and exporting the root certificate to a management terminal according to a request for generating the root key and the root certificate submitted by the management terminal;
the key certificate management server interacting with the encryption machine to generate a key of version signature according to a request for generating the key of the version signature submitted by the management terminal;
the key certificate management server interacting with the encryption machine to generate a signed version data according to a request for the version data and the version signature submitted by a product-like data acquisition terminal; and
the key certificate management server interacting with the encryption machine to generate a key and a certificate of the home gateway, exporting data of public key corresponding to a private key of the version signature, and returning the key and the certificate of the home gateway, and the data of the public key to the product-like data acquisition terminal, according to individualized data of the home gateway, a request for generating the key and the certificate of the home gateway, and a request for exporting the public key corresponding to the private key of the version signature submitted by the product-like data acquisition terminal.

The request for generating the root key and the root certificate carries an operator identifier; and the request for generating the key of the version signature, the request for the version signature, and the request for generating the key and the certificate of the home gateway carry the operator identifier and region identifier.

The method further comprises: only returning an identifier corresponding to the key to the key certificate management server when the encryption machine generates the root key and the key of the version signature.

The method further comprises: the key certificate management server managing the identifier corresponding to the generated key, the certificate, operator configuration information, user permission, and operation log.

According to another aspect of the present invention, there is also provided a system for generating a key certificate used for a home gateway.

The system for generating a key certificate used for a home gateway according to the present invention comprises a management terminal, a product-like data acquisition terminal, and a key certificate management server and an encryption machine, wherein,
the management terminal is configured to submit a request for generating a root key and a root certificate, and a request for exporting the root certificate, and to acquire the exported root certificate; the product-like data acquisition terminal is configured to submit individualized data of the home gateway, a request for generating a key and a certificate of the home gateway, and to acquire the key and the certificate of the home gateway; the key certificate management server is configured to receive and respond the requests from the management terminal and the product-like data acquisition terminal, and to notify the encryption machine to perform operations of generating the key and the certificate according to the requests; and the encryption machine is configured to generate the key and signature, to save the generated key, and to return identifiers corresponding to the generated root key to the key certificate management server, and to return the key of the home gateway to the key certificate management server directly.

According to another aspect of the present invention, there is further provided a method for generating a key certificate used for a home gateway.

The method for generating a key certificate used for a home gateway according to the present invention comprises: 1) a key certificate management server interacting with an encryption machine to generate a root key and a root certificate, and exporting the root certificate to a management terminal according to a request for generating the root key and the root certificate submitted by the management terminal; and 2) the key certificate management server interacting with the encryption machine to generate a key and a certificate of the home gateway, and returning the generated key and the certificate of the home gateway to a product-like data terminal according to individualized data of the home gateway and a request for generating the key and the certificate of the home gateway submitted by the product-like data acquisition terminal.

The present invention provides methods and systems for generating a key certificate used for a home gateway, which ensure the absolute security of generating keys and certificates by completely shielding from interaction with external directly during the process of generating the keys and the certificates; which can generate the keys and the certificates of home gateways in batch; and which make operation easy and reduce the difficulty in generating and managing the keys and the certificates through directly importing the submitted individualized data in a table form in which only an operator and a region are required to be selected and no configuration is required. In the present invention, the authentication mechanism based on a key and a certificate is employed in the communication between the operator server and the home gateway to ensure the communication security; the transmitted data is encrypted to guarantee the secrecy and integrity of information transmission; and the transmitted data is signed to guarantee the authenticity of the identification.

Other features and advantages of the present invention will be detailed in the description, and partly obvious from the description, or can be understood through implementing the present invention. The objects and other advantages of the present invention can be achieved and obtained through the structure specified by the specification, claims and drawings.

### Brief Description of the Drawings

Drawings are provided for the further understanding of the present invention and form a part of the specification, which are used to explain the present invention with embodiments of the present invention rather than limit the present invention, wherein,
Fig.1 is a schematic diagram of the composition structure of a system for generating a key certificate used for a home gateway according to the present embodiment; and
Fig.2 is a flow chart showing a method for generating a key certificate used for a home gateway according to the present embodiment.

### Detailed Description of the Embodiments

Functionality Overview

In the embodiments of the present invention, a novel method and system for generating a key certificate used for a home gateway is employed, in which during the process of generating a key and a certificate, a key certificate management server interacts with an encryption machine, and performs the operations of generating a root key and a root certificate, exporting the root certificate, generating a key of version signature, a version data signature, and generating the key and the certificate of the home gateway, according to requests submitted by a management terminal and a product-like data acquisition terminal; exports the generated root certificate to the management terminal, returns the signed version data to the product-like data acquisition terminal, returns the generated key and the certificate of the home gateway to the product-like data acquisition terminal, exports a public key corresponding to a private key of version signature and returns the public key to the product-like acquisition terminal. Therefore, it is realized to avoid the security problem occurring in the communication between an operator server and the home gateway.

In order to better understand the present invention, the embodiment of position advertisement service mass-decentralized based on a region policy will be described in connection with drawings and embodiments. It should be understood that the preferred embodiment described herein is intended to illustrate and explain the present invention, instead of limiting the present invention.

In the case of no contradiction, the embodiments and the features thereof can be combined with each other.

According to the embodiment of the present invention, there is provided a system for generating a key certificate used for a home gateway.

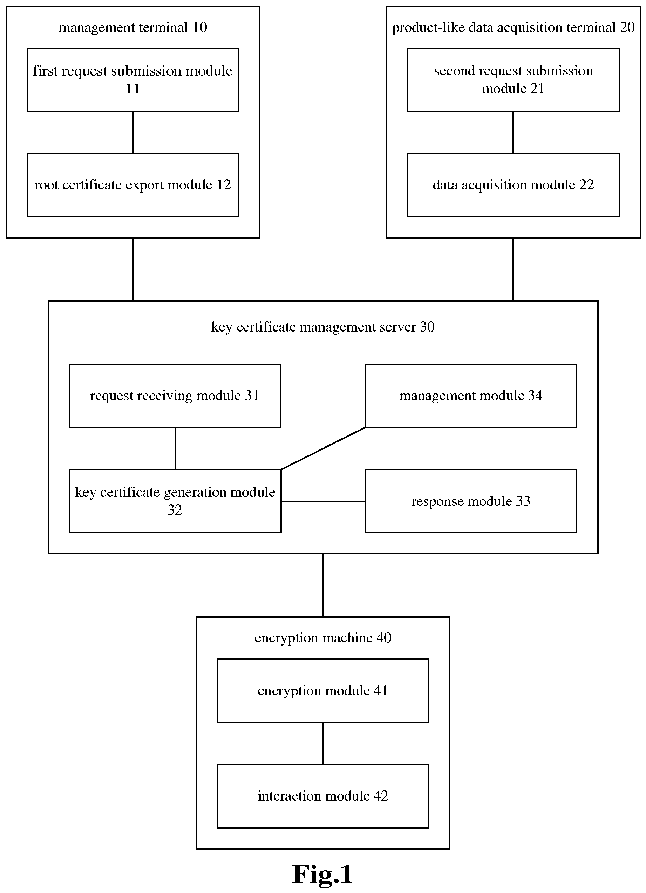

There is provided a system for generating a key certificate used for a home gateway according to the embodiment of the present invention. As shown in Fig.1, the system comprises a management terminal 10, a product-like data acquisition terminal 20, a key certificate management server 30 and an encryption machine 40.

The management terminal 10 is configured to submit to the key certificate management server 30 a request for generating a root key and a root certificate, and to request the key certificate management server 30 to generate the root key and the root certificate, wherein the request carries an operator identifier. The key certificate management server 30 reads out the parameters, such as bit number, type and format of the root key, serial number of the root certificate, effective period, information of name item and information of extension item, etc. from its own database according to the operator identifier in the request. The key certificate management server 30 interacts with the encryption machine to generate the root key and the root certificate. After the root key and the root certificate are generated, the management terminal 10 may submit to the key certificate management server 30 the request for exporting the root certificate, so as to request the key certificate management server 30 to export the generated root certificate. The management terminal 10 is further configured to submit to the key certificate management server 30 a request for generating a key of version signature, so as to request the key certificate management server 30 to generate the key of the version signature.

The product-like data acquisition terminal 20 is configured to submit a request for version data and the version signature to the key certificate management server 30 when the version data is required to be signed, and to acquire the signed version data from the key certificate management server 30 after the signing operation; and configured to submit individualized data of the home gateway to the key certificate management server 30, to submit a request for generating a key and a certificate of the home gateway and a request for exporting a public key corresponding to a private key of the version signature, and to acquire the key and the certificate of the home gateway from the key certificate management server 30 and the public key corresponding to the private key of the version signature when the key and the certificate of the home gateway are required to be generated. The submitted request comprises the operator identifier and region identifier. The individualized data of the home gateway, which is read out by the key certificate management server from its own database according to the operator identifier and the region identifier, includes the parameters such as the bit number, type and form of the key of the home gateway, information such as the name item and expansion item of the product certificate, etc., and the identifier of the public key corresponding to the private key of the version signature to be exported.

The key certificate management server 30 is configured to receive and respond various requests from the management terminal 10 and the product-like data acquisition terminal 20, to interact with the encryption machine 40 according to the various requests to perform various operations particularly comprising the followings.

Upon receiving the request for generating the root key from the management terminal 10, the key certificate management server 30 reads, according to the request, the parameter information such as the bit number, the type and the format of the root key in the database and generates new request information and informs the encryption machine 40. The encryption machine 40 performs the operation of generating the root key which comprises the public key and private key of the root, according to the information such as the bit number, the type and the format of the root key carried in the new request information; and after completing the operations, saves the generated root key, returns the identifier corresponding to the generated root key to the key certificate management server 30 which saves and manages the identifier in its own database. It is to be noted that the encryption machine 40 returns the identifier corresponding to the root key to the key certificate management server 30 for the purpose of security, instead of directly returning the generated root key to the key certificate management server 30.

Upon receiving the request for generating the root certificate from the management terminal 10, the key certificate management server 30, according to the request, reads from the data base the identifiers of the public and private keys of the root, the serial number, effective period of the root certificate, and the information of the name item and the information of expansion item and performs the operation of generating the root certificate; the operation of generating the root certificate needs to acquire the data of the public and private keys of the root from the encryption machine 40, and informs the encryption machine 40 to use the private key of the root to sign the root certificate; the generated root certificate is saved in the database of the key certificate management server 30 which can manage the root certificates saved in the database.

Upon receiving the request for exporting the root certificate from the management terminal 10, the key certificate management server 30 exports the root certificate in the database to the management terminal 10.

Upon receiving the request for generating the key of the version signature from the management terminal 10, the key certificate management server 30 reads the database, generates new request information and informs the encryption machine 40 according to the request. The encryption machine 40 performs the operation of generating the key of the version signature, according to the information carried by the new request, such as the bit number, the type and the format of the key, and after the operation saves the generated key and returns the identifier corresponding to the generated key to the key certificate management server 30. The key certificate management server 30 saves and manages the identifier in its own database; and the generated key of version signature comprises the public key and the private keys.

Upon receiving the request for the version data and version signature from the product-like data acquisition terminal 20, the key certificate management server 30 reads the identifier of the private key of the version signature from the database and informs the encryption machine 40. The encryption 40 performs signature operation on the version data with the key of the version signature, and returns the signed version data to the key certificate management server 30 after completing the operation. The key certificate management server 30 returns the signed version data to the product-like data acquisition terminal 20.

Upon receiving the request for generating the key and the certificate and the individualized data of the home gateway from the product-like data acquisition terminal 20, the key certificate management server 30 reads the database and generates new request information and informs the encryption machine 40 based on the request. The encryption machine 40 performs the operation of generating the key of the home gateway, according to the information such as the bit number, the type, and the format, etc. carried in the new request. The key certificate management server 30 performs the operation of generating the certificate of the home gateway according to the information of the name item and the information of the expansion item, root certificate, the identifier of root private key, the effective period of the certificate, etc. carried in the new request. The key certificate management server 30 returns the generated key and the certificate of the home gateway to the product-like data acquisition terminal 20.

The encryption machine 40 is configured to perform the operation of generating the signature of the key and data, wherein the signature operation comprises the signature when generating the certificate and the signature on the version data; also configured to save the generated root key and the key of the version signature, and to return the identifiers corresponding to the root key and the key of the version signature and the signed version data to the key certificate management server 30; and also configured to return the generated key and certificate of the home gateway to the key certificate management server 30.

In the above, the management terminal 10 further comprises a first request submission module 11 and a root certificate export module 12 connected with each other. The first request submission module 11 is configured to submit the request for generating a root key and a root certificate to the key certificate management server 30, and to submit the request for generating the key of the version signature and the request for exporting the root certificate. The root certificate export module 12 is configured to acquire the root certificate exported by the key certificate management server 30.

The product-like data acquisition terminal 20 further comprises a second request submission module 21 and a data acquisition module 22 connected with each other. The second request submission module 21 is configured to submit the individualized data of the home gateway, the request for generating the key and the certificate of the home gateway, and the request for the version data and version signature to the key certificate management server 30. The data acquisition module 22 is configured to acquire the key and the certificate of the home gateway, and the signed version data.

The key certificate management server 30 further comprises: a request receiving module 31, a key certificate generation module 32, a response module 33 and a management module 34. The request receiving module 31 is configured to receive various requests from the management terminal 10 and the product-like data acquisition terminal 20. The key certificate generation module 32, connected with the request receiving module 31, is configured to interact with the encryption machine 40, according to a request, to acquire the identifier of the key and the signed data; and to generate a certificate according to the request. The response module 33, connected with the key certificate generation module 32, is configured to respond a request, to provide the generated root certificate to the management terminal 10, to provide the generated key and the certificate of the home gateway, the signed version data, the data of the public key corresponding to the private key of the version signature to the product-like data acquisition terminal 20. The management module 34, connected with the key certificate generation module 32, is configured to manage the identifier corresponding to the generated key, the certificate, operator configuration information, user permission, and operation log.

The encryption machine 40 further comprises: an encryption module 41 and an interaction module 42 connected with each other. The encryption module 41 is configured to perform the operation of generating the key and signature, and to save the generated key. The interaction module 42 is configured to interact with the key certificate management server 30, to return the identifiers corresponding to the root key and the key of the version signature, and the signature to the key certificate management server 30; and to return the key of the home gateway to the key certificate management server 30 directly.

According to one embodiment of the present invention, there is further provided a method for generating a key certificate used for a home gateway.

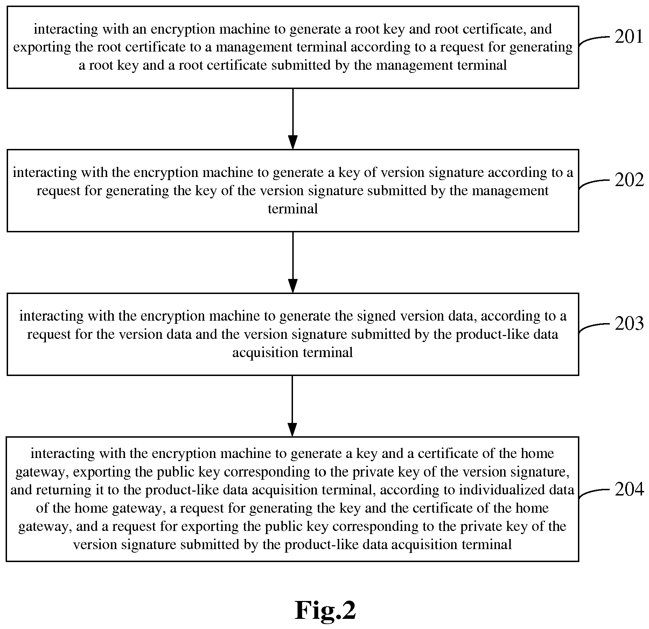

The method for generating a key certificate used for a home gateway according to the embodiment of the present invention, as shown in Fig.2, comprises the following steps (Step 201-Step 204).

Step 201, a key certificate management server interacts with an encryption machine to generate a root key and a root certificate, and exports the root certificate to a management terminal according to a request for generating the root key and the root certificate submitted by the management terminal.

It is to be noted that different operators have different root keys and root certificates in practice, i.e., the root keys and the root certificates are generated corresponding to different operators; therefore in one preferred embodiment of the present invention, the key certificate management server can import the configuration data customized by each operator to the database, and the configuration data comprises: bit number, type and format of the root key, and information of name item and information of expansion item of the root certificate, etc.. Accordingly, the management terminal only needs to select an operator identifier when submitting a request for generating a root key and a root certificate; and correspondingly, the key certificate management server reads out from its own database the configuration data corresponding to the operator identifier according to the operator identifier in the request, so as to perform the operation of generating the root key and the key certificate based on the configuration data.

With a view to security, the encryption machine performs the encryption operation and generates the root key, and afterwards returns the identifier corresponding to the root key to the key certificate management server, rather than directly returning the root key to the key certificate management server; and the database of the key certificate management server saves the identifier corresponding to the root key and the certificate, and the key certificate management server may manage the identifier and the certificate in the database. Moreover, the root certificate is the basis of issuing other certificates, wherein in the case that there is not a root certificate, then it can not be realized to generate and issue other certificates.

After the generation of the root certificate, the management terminal may submit to the key certificate management server the request for exporting the root certificate, wherein the request carries the operator identifier; the key certificate management server searches the corresponding root certificate according to the operator identifier in the request, and exports the root certificate to the management terminal; the management terminal provides the root certificate to the operator.

Step 202, the key certificate management server interacts with the encryption machine to generate a key of version signature according to a request for generating the key of the version signature submitted by the management terminal.

It is noted that, because the keys of the version signatures used by the operator are different in various regions in practice, therefore it is necessary to generate different keys based on different regions. In one preferred embodiment of the present invention, when the management terminal submits the request for generating a key of version signature, it is only required to select the operator identifier and region identifier; and correspondingly, the key certificate management server reads out from its own database the corresponding configuration data according to the operator identifier and region identifier in the request, so as to interact with the encryption machine to realize the operation of generating a key.

With a view to security, the encryption machine performs the encryption operation and generates a key of version signature, and afterwards returns the identifier corresponding to the key to the key certificate management server, rather than directly returning the key to the key certificate management server. The database of the key certificate management server saves the identifier corresponding to the key, and the key certificate management server may manage the identifier in the database.

Step 203, the key certificate management server interacts with the encryption machine to generate the signed version data, according to a request for the version data and the version signature submitted by the product-like data acquisition terminal.

In practice, when a new version data is issued each time, it is required to sign the version data. The product-like data acquisition terminal may select an operator identifier and a region identifier, so as to submit a request for the version data and version signature to the key certificate management server; and the key certificate management server reads out the identifier of the private key of the version signature in the database according to the request, and notifies the encryption machine to perform the operation of signing the version data, and upon the completion of the operation, the encryption machine returns the signed version data to the key certificate management server ,and then the key certificate management server returns the signed version data to the product-like data acquisition terminal.

It is to be noted that during the operation of signing the version data, the product-like data acquisition terminal can present the operation page after submitting the request for the version signature; and the signature status of the version data can be checked through the operation page wherein if the status indicates signature completion, then downloading can be performed by clicking in the operation page, i.e., the signed version data can be acquired from the key certificate management server.

Step 204, the key certificate management server interacts with the encryption machine to generate a key and a certificate of the home gateway, exports the public key corresponding to the private key of the version signature, and returns it to the product-like data acquisition terminal, according to individualized data of the home gateway, a request for generating the key and the certificate of the home gateway, and a request for exporting the public key corresponding to the private key of the version signature submitted by the product-like data acquisition terminal.

The embodiment of the present invention supports the generation in batch of the key and the certificate of a home gateway. The product-like data acquisition terminal may arrange the submitted individualized data in form of table and save the arranged individualized data, wherein the submitted individualized data comprises the serial number of the home gateway, etc.. The product-like data acquisition terminal selects an operator identifier and a region identifier, and submits the table containing individualized data and afterwards presents the operation page; the key certificate management server reads out the identifier of the root key, the root certificate, the identifier of the public key corresponding to the private key of the version signature, the information such as the type and format of the product key, and the information of the name item and expansion item of the certificate from the database; and interacts with the encryption machine to realize the operation of generating the key and the certificate of a home gateway, exports the public key corresponding to the private key of the version signature, fills the generated key and certificate, and the data of the public key corresponding to the private key of the version signature into the corresponding item of the table. The product-like data acquisition terminal checks the status of the operation of generating the key and the certificate through the operation page wherein if the status indicates the generation completion, then the downloading can be performed by clicking in the operation page, that is, it can be realized to acquire the table containing the key and the certificate of the home gateway, the data of the public key corresponding to the private key of the version signature from the key certificate management server.

After acquiring the table containing the key and the certificate of the home gateway and the signed version data, the product-like data acquisition terminal provides the table and the signed version data to the production line of the home gateway, so as to write the signed version data and the key and the certificate of each home gateway into the corresponding home gateway.

It is noted that if it is not necessary to verify version in practice, then it is not necessary to generate the key of the version signature, version data, private key and public key of the version signature, thus there is provided another system and method for generating the key certificate used for the home gateway according to the embodiment of the present invention.

Another system for generating the key certificate used for the home gateway according to the embodiment of the present invention comprises: a management terminal, configured to submit a request for generating a root key and a root certificate and a request for exporting the root certificate, and to acquire the exported root certificate; a product-like data acquisition terminal, configured to submit individualized data of the home gateway and a request for generating the key and the certificate of the home gateway, and to acquire the key and the certificate of the home gateway; a key certificate management server, configured to receive and respond the requests from the management terminal and the product-like data acquisition terminal, and to notify an encryption machine to perform operations of generating the key and the certificate according to the request; and the encryption machine, configured to generate the key and signature, to save the generated key, and to return an identifier corresponding to the generated root key to the key certificate management server, and to return the key of the home gateway to the key certificate management server directly.

Another method for generating the key certificate used for the home gateway according to the embodiment of the present invention comprises the following steps. Step 1, a key certificate management server interacts with an encryption machine to generate a root key and a root certificate, and exports the root certificate to a management terminal according to a request for generating the root key and the root certificate submitted by the management terminal. Step 2, the key certificate management server interacts with the encryption machine to generate a key and a certificate of the home gateway, and returns the generated key and the certificate of the home gateway to the product-like data acquisition terminal according to individualized data of the home gateway and a request for generating the key and the certificate of the home gateway submitted by the product-like data acquisition terminal.

In summery, because the corresponding key and certificate, the data of the public key corresponding to the private key of the version signature, and the signed version data are written into each home gateway, when communicating with the home gateway, the server of the operator may take advantage of the existing security authentication mechanism based on a key and a certificate to realize secure communication according to the key and the certificate of the home gateway, so as to avoid the home gateway from various security risks such as being maliciously controlled and being illegally accessed.

It is to be understood that the present invention can be modified or altered according to above solution description by those skilled in the art, for example, the focus distribution fractionizing method can be performed by taking advantage of other attributes of the users, and all of those modification and alteration are protected by the appended claims.

## Claims

1. A system for generating a key certificate used for a home gateway,
comprising:
a management terminal (10), configured to submit a request for generating a root key and a root certificate, to submit a request for generating a signature key of a software version for the home gateway, to submit a request for exporting the root certificate, and to acquire the exported root certificate;
a data acquisition terminal (20), configured to submit a request for data of the sowftware version and a signature of the software version, and to acquire signed data of the software version; to submit individualized data of the home gateway, to submit a request for generating a home gateway key and a home gateway certificate and a request for exporting data of a public key corresponding to a private signature key of the software version and to acquire the home gateway key and the home gateway certificate, and the data of the public key corresponding to the private signature key;
a key certificate management server (30), configured to receive the individualized data and the requests from the management terminal and the data acquisition terminal, to notify an encryption machine to perform operations of generating keys and the signature according to the requests, and to perform operations of generating the root certificate according to the request for generating the root certificate and generating the home gateway certificate according to the request for generating the home gateway certificate and the root certificate.
the encryption machine (40), configured to generate the keys and the signature, to save the keys, and to return identifiers corresponding to the root key and the signature key and the signature to the key certificate management server; and to return the home gateway key to the key certificate management server directly.

2. The system for generating a key certificate used for a home gateway according to claim 1, wherein the management terminal (10) further comprises:
a first request submission module (11), configured to submit the request for generating the root key and the root certificate to the key certificate management server, to submit the request for generating the signature key, and to submit the request for exporting the root certificate; and
a root certificate export module (12), configured to acquire the root certificate exported from the key certificate management server.

3. The system for generating a key certificate used for a home gateway according to claim 1, wherein the data acquisition terminal (20) further comprises:
a second request submission module (21), configured to submit the individualized data of the home gateway to the key certificate management server, to submit the request for generating the home gateway key and the home gateway certificate and the request for exporting the data of the public key corresponding to the private signature key, and to submit the request for the data and the signature; and
a data acquisition module (22), configured to acquire the home gateway key and the home gateway certificate, and to acquire the signed data, and the public key corresponding to the private signature key.

4. The system for generating a key certificate used for a home gateway according to claim 1, wherein the key certificate management server (30) further comprises:
a request receiving module (31), configured to receive the requests from the management terminal and the data acquisition terminal;
a key certificate generation module (32), configured to interact with the encryption machine according to the requests, to acquire the identifiers of the root key and the signature key, the data of public and private home gateway keys, to obtain a root public key according to an identifier of the root public key and the data of the public key corresponding to the private signature key, to acquire the signed data, and to generate the root certificate according to the request for generating the root certificate and the home gateway certificate according to the request for generating the home gateway certificate and the root certificate;
a response module (33), configured to provide the root certificate to the management terminal, to provide the home gateway key and the home gateway certificate, the public key corresponding to the private signature key and the signed data to the data acquisition terminal; and
a management module (34), configured to manage the identifiers corresponding to generated keys, certificates, operator configuration information, user permission, and operation log.

5. The system for generating a key certificate used for a home gateway according to claim 1, wherein the encryption machine (40) further comprises:
an encryption module (41), configured to perform the operations of generating the keys and the signature, and to save the keys; and
an interaction module (42), configured to interact with the key certificate management server, to return the identifiers corresponding to the root key and the signature key, and the signature to the key certificate management server; and to return the home gateway key to the key certificate management server directly.

6. A method for generating a key certificate used for a home gateway, the method comprising the steps of:
a key certificate management server interacting with an encryption machine to generate a root key and a root certificate according to a request for generating the root key and the root certificate submitted by a management terminal, and exporting the root certificate to the management terminal (201);
the key certificate management server interacting with the encryption machine to generate a signature key of a software version for the home gateway according to a request for generating the r signature key submitted by the management terminal (202);
the key certificate management server interacting with the encryption machine to generate signed data of the software version according to a request for data and a signature of the software version submitted by a data acquisition terminal (203); and
the key certificate management server interacting with the encryption machine to generate a home gateway key and a home gateway certificate, exporting data of a public key corresponding to a private signature key of the software version, and returning the home gateway key and the home gateway certificate, and the data of the public key to the data acquisition terminal, according to individualized data of the home gateway, a request for generating the home gateway key and the home gateway certificate, and a request for exporting the public key corresponding to the private signature key submitted by the data acquisition terminal (204).

7. The method for generating a key certificate used for a home gateway according to claim 6, wherein the request for generating the root key and the root certificate carries an operator identifier; and the request for generating the signature key, the request for the signature, and the request for generating the home gateway key and the home gateway certificate carry the operator identifier and a region identifier.

8. The method for generating a key certificate used for a home gateway according to claim 6, wherein the method further comprises: only returning identifiers corresponding to the root key and the signature key to the key certificate management server when the encryption machine generates the root key and the signature key.

9. The method for generating a key certificate used for a home gateway according to claim 6, or 7, or 8, Wherein the method further comprises: the key certificate management server managing identifiers corresponding to the generated keys, certificates, operator configuration information, user permission, and operation log.

## Patentansprüche

1. System zum Erzeugen eines Schlüssel-Zertifikats, welches für ein Home-Gateway verwendet wird, umfassend:
ein Verwaltungs-Endgerät (10), welches dazu eingerichtet ist, eine Anfrage zum Erzeugen eines Root-Schlüssels und eines Root-Zertifikats zu übermitteln, eine Anfrage zum Erzeugen eines Signatur-Schlüssels einer Softwareversion für das Home-Gateway zu übermitteln, eine Anfrage zum Exportieren des Root-Zertifikats zu übermitteln und das exportierte Root-Zertifikat zu beziehen;
ein Daten-Bezugs-Endgerät (20), welches dazu eingerichtet ist, eine Anfrage für Daten der Softwareversion und eine Signatur der Softwareversion zu übermitteln und signierte Daten der Softwareversion zu beziehen; individualisierte Daten des Home-Gateway zu übermitteln, eine Anfrage zum Erzeugen eines Home-Gateway-Schlüssels und eines Home-Gateway-Zertifikats und eine Anfrage zum Exportieren von Daten eines öffentlichen Schlüssels, welcher einem privaten Signatur-Schlüssel der Softwareversion entspricht, zu übermitteln und den Home-Gateway-Schlüssel und das Home-Gateway-Zertifikat und die Daten des öffentlichen Schlüssels, welcher dem privaten Signatur-Schlüssel entspricht, zu beziehen;
einen Schlüssel-Zertifikat-Verwaltungs-Server (30), welcher dazu eingerichtet ist, die individualisierten Daten und die Anfragen von dem Verwaltungs-Endgerät und dem Daten-Bezugs-Endgerät zu empfangen, eine Verschlüsselungsmaschine zu benachrichtigen, Operationen eines Erzeugens von Schlüsseln und der Signatur gemäß den Anfragen durchzuführen, und Operationen eines Erzeugens des Root-Zertifikats gemäß der Anfrage zum Erzeugen des Root-Zertifikats und eines Erzeugens des Home-Gateway-Zertifikats gemäß der Anfrage zum Erzeugen des Home-Gateway-Zertifikats und des Root-Zertifikats durchzuführen,
die Verschlüsselungsmaschine (40), welche dazu eingerichtet ist, die Schlüssel und die Signatur zu erzeugen, die Schlüssel zu sichern und Kennungen, entsprechend dem Root-Schlüssel und dem Signatur-Schlüssel, und die Signatur an den Schlüssel-Zertifikat-Verwaltungs-Server zurückzugeben; und den Home-Gateway-Schlüssel an den Schlüssel-Zertifikat-Verwaltungs-Server direkt zurückzugeben.

2. System zum Erzeugen eines Schlüssel-Zertifikats, welches für ein Home-Gateway verwendet wird, nach Anspruch 1, wobei das Verwaltungs-Endgerät (10) ferner umfasst:
ein erstes Anfrage-Übermittlungs-Modul (11), welches dazu eingerichtet ist, die Anfrage zum Erzeugen des Root-Schlüssels und des Root-Zertifikats an den Schlüssel-Zertifikat-Verwaltungs-Server zu übermitteln, die Anfrage zum Erzeugen des Signatur-Schlüssels zu übermitteln und die Anfrage zum Exportieren des Root-Zertifikats zu übermitteln; und
ein Root-Zertifikat-Export-Modul (12), welches dazu eingerichtet ist, dass Root-Zertifikat zu beziehen, welches von dem Schlüssel-Zertifikat-Verwaltungs-Server exportiert worden ist.

3. System zum Erzeugen eines Schlüssel-Zertifikats, welches für ein Home-Gateway verwendet wird, nach Anspruch 1, wobei das Daten-Bezugs-Endgerät (20) ferner umfasst:
ein zweites Anfrage-Übermittlungs-Modul (21), welches dazu eingerichtet ist, die individualisierten Daten des Home-Gateway an den Schlüssel-Zertifikat-Verwaltungs-Server zu übermitteln, die Anfrage zum Erzeugen des Home-Gateway-Schlüssels und des Home-Gateway-Zertifikats und die Anfrage zum Exportieren der Daten des öffentlichen Schlüssels, welcher dem privaten Signatur-Schlüssel entspricht, zu übermitteln und die Anfrage für die Daten und die Signatur zu übermitteln; und
ein Daten-Bezugs-Modul (22), welches dazu eingerichtet ist, den Home-Gateway-Schlüssel und das Home-Gateway-Zertifikat zu beziehen und die signierten Daten und den öffentlichen Schlüssel, welcher dem privaten Signatur-Schlüssel entspricht, zu beziehen.

4. System zum Erzeugen eines Schlüssel-Zertifikats, welches für ein Home-Gateway verwendet wird, nach Anspruch 1, wobei der Schlüssel-Zertifikat-Verwaltungs-Server (30) ferner umfasst:
ein Anfrage-Empfangs-Modul (31), welches dazu eingerichtet ist, die Anfragen von dem Verwaltungs-Endgerät und dem Daten-Bezugs-Endgerät zu empfangen;
ein Schlüssel-Zertifikat-Erzeugungs-Modul (31), welches dazu eingerichtet ist, mit der Verschlüsselungsmaschine gemäß den Anfragen zu interagieren, die Kennungen des Root-Schlüssels und des Signatur-Schlüssels, die Daten der öffentlichen und privaten Home-Gateway-Schlüssel zu beziehen, einen öffentlichen Root-Schlüssel gemäß einer Kennung des öffentlichen Root-Schlüssels und der Daten des öffentlichen Schlüssels, welcher dem privaten Signatur-Schlüssel entspricht, zu erhalten, die signierten Daten zu beziehen und das Root-Zertifikat gemäß der Anfrage zum Erzeugen des Root-Zertifikats und das Home-Gateway-Zertifikat gemäß der Anfrage zum Erzeugen des Home-Gateway-Zertifikats und des Root-Zertifikats zu erzeugen;
ein Antwort-Modul (33), welches dazu eingerichtet ist, das Root-Zertifikat an das Verwaltungs-Endgerät bereitzustellen, den Home-Gateway-Schlüssel und das Home-Gateway-Zertifikat, den öffentlichen Schlüssel, welcher dem privaten Signatur-Schlüssel entspricht, und die signierten Daten an das Daten-Bezugs-Endgerät bereitzustellen; und
ein Verwaltungs-Modul (34), welches dazu eingerichtet ist, die Kennungen, welche erzeugten Schlüsseln, Zertifikaten, Bediener-Konfigurations-Informationen, Benutzer-Erlaubnissen und Betriebsaufzeichnungen entsprechen, zu verwalten.

5. System zum Erzeugen eines Schlüssel-Zertifikats, welches für ein Home-Gateway verwendet wird, nach Anspruch 1, wobei die Verschlüsselungsmaschine (40) ferner umfasst:
ein Verschlüsselungs-Modul (41), welches dazu eingerichtet ist, die Operationen eines Erzeugens der Schlüssel und der Signatur durchzuführen und die Schlüssel zu sichern; und
ein Interaktions-Modul (42), welches dazu eingerichtet ist, mit dem Schlüssel-Zertifikat-Verwaltungs-Server zu interagieren, die Kennungen, welche dem Root-Schlüssel und dem Signatur-Schlüssel entsprechen, und die Signatur an den Schlüssel-Zertifikat-Verwaltungs-Server zurückzugeben; und den Home-Gateway-Schlüssel an den Schlüssel-Zertifikat-Verwaltungs-Server direkt zurückzugeben.

6. Verfahren zum Erzeugen eines Schlüssel-Zertifikats, welches für ein Home-Gateway verwendet wird, wobei das Verfahren die Schritte umfasst:
ein Schlüssel-Zertifikat-Verwaltungs-Server interagiert mit einer Verschlüsselungsmaschine, um einen Root-Schlüssel und ein Root-Zertifikat gemäß einer Anfrage zum Erzeugen des Root-Schlüssels und des Root-Zertifikats zu erzeugen, welche durch ein Verwaltungs-Endgerät übermittelt wird, und das Root-Zertifikat an das Verwaltungs-Endgerät zu exportieren (201);
der Schlüssel-Zertifikat-Verwaltungs-Server interagiert mit der Verschlüsselungsmaschine, um einen Signatur-Schlüssel einer Softwareversion für das Home-Gateway gemäß einer Anfrage zum Erzeugen des Signatur-Schlüssels zu erzeugen, welche durch das Verwaltungs-Endgerät übermittelt wird (202);
der Schlüssel-Zertifikat-Verwaltungs-Server interagiert mit der Verschlüsselungsmaschine, um signierte Daten der Softwareversion gemäß einer Anfrage für Daten und eine Signatur der Softwareversion zu erzeugen, welche durch ein Daten-Bezugs-Endgerät übermittelt wird (203); und
der Schlüssel-Zertifikat-Verwaltungs-Server interagiert mit der Verschlüsselungsmaschine, um einen Home-Gateway-Schlüssel und ein Home-Gateway-Zertifikat zu erzeugen, exportiert Daten eines öffentlichen Schlüssels, welcher einem privaten Signatur-Schlüssel der Softwareversion entspricht, und gibt den Home-Gateway-Schlüssel und das Home-Gateway-Zertifikat und die Daten des öffentlichen Schlüssels an das Daten-Bezugs-Endgerät gemäß individualisierten Daten des Home-Gateway, einer Anfrage zum Erzeugen des Home-Gateway-Schlüssels und des Home-Gateway-Zertifikats und einer Anfrage zum Exportieren des öffentlichen Schlüssels, welcher dem privaten Signatur-Schlüssel entspricht, welche durch das Daten-Bezugs-Endgerät übermittelt wird, zurück (204).

7. Verfahren zum Erzeugen eines Schlüssel-Zertifikats, welches für ein Home-Gateway verwendet wird, nach Anspruch 6, wobei die Anfrage zum Erzeugen des Root-Schlüssels und des Root-Zertifikats eine Bediener-Kennung trägt; und die Anfrage zum Erzeugen des Signatur-Schlüssels, die Anfrage für die Signatur und die Anfrage zum Erzeugen des Home-Gateway-Schlüssels und des Home-Gateway-Zertifikats die Bediener-Kennung und eine Region-Kennung tragen.

8. Verfahren zum Erzeugen eines Schlüssel-Zertifikats, welches für ein Home-Gateway verwendet wird, nach Anspruch 6, wobei das Verfahren ferner umfasst: nur Zurückgeben von Kennungen, welche dem Root-Schlüssel und dem Signatur-Schlüssel entsprechen, an den Schlüssel-Zertifikat-Verwaltungs-Server, wenn die Verschlüsselungsmaschine den Root-Schlüssel und den Signatur-Schlüssel erzeugt.

9. Verfahren zum Erzeugen eines Schlüssel-Zertifikats, welches für ein Home-Gateway verwendet wird, nach Anspruch 6 oder 7 oder 8, wobei das Verfahren ferner umfasst: der Schlüssel-Zertifikat-Verwaltungs-Server verwaltet Kennungen, welche den erzeugten Schlüsseln, Zertifikaten, Bediener-Konfigurations-Informationen, Benutzer-Erlaubnissen und Betriebsaufzeichnungen entsprechen.

## Revendications

1. Système pour générer un certificat de clé utilisé pour une passerelle domestique, comprenant :
un terminal de gestion (10), configuré pour soumettre une demande de génération d'une clé racine et d'un certificat racine, pour soumettre une demande de génération d'une clé de signature d'une version de logiciel pour la passerelle domestique, pour soumettre une demande d'export du certificat racine, et pour acquérir le certificat racine exporté ;
un terminal d'acquisition de données (20), configuré pour soumettre une demande de données de la version de logiciel, et une signature de la version de logiciel, et pour acquérir des données signées de la version de logiciel ; pour soumettre des données individualisées de la passerelle domestique, pour soumettre une demande de génération d'une clé de passerelle domestique et d'un certificat de passerelle domestique et une demande d'export de données d'une clé publique correspondant à une clé de signature privée de la version de logiciel et pour acquérir la clé de passerelle domestique et le certificat de passerelle domestique, et les données de la clé publique correspondant à la clé de signature privée ;
un serveur de gestion de certificat de clé (30), configuré pour recevoir les données individualisées et les demandes à partir du terminal de gestion et du terminal d'acquisition de données, pour notifier, à une machine de chiffrement, de réaliser des opérations de génération de clés et de la signature selon les demandes, et pour réaliser des opérations de génération du certificat racine selon la demande de génération du certificat racine et de génération du certificat de passerelle domestique selon la demande de génération du certificat de passerelle domestique et du certificat racine,
la machine de chiffrement (40) étant configurée pour générer les clés et la signature, pour sauvegarder les clés, et pour renvoyer des identifiants correspondant à la clé racine et la clé de signature et la signature au serveur de gestion de certificat de clé ; et pour renvoyer la clé de passerelle domestique au serveur de gestion de certificat de clé directement.

2. Système pour générer un certificat de clé utilisé pour une passerelle domestique selon la revendication 1, dans lequel le terminal de gestion (10) comprend en outre :
un premier module de soumission de demande (11), configuré pour soumettre la demande de génération de la clé racine et du certificat racine au serveur de gestion de certificat de clé, pour soumettre la demande de génération de la clé de signature, et pour soumettre la demande d'export du certificat racine ; et
un module d'export de certificat racine (12), configuré pour acquérir le certificat racine exporté à partir du serveur de gestion de certificat de clé.

3. Système pour générer un certificat de clé utilisé pour une passerelle domestique selon la revendication 1, dans lequel le terminal d'acquisition de données (20) comprend en outre :
un second module de soumission de demande (21), configuré pour soumettre les données individualisées de la passerelle domestique au serveur de gestion de certificat de clé, pour soumettre la demande de génération de la clé de passerelle domestique et du certificat de passerelle domestique et la demande d'export des données de la clé publique correspondant à la clé de signature privée, et pour soumettre la demande des données et de la signature ; et
un module d'acquisition de données (22), configuré pour acquérir la clé de passerelle domestique et le certificat de passerelle domestique, et pour acquérir les données signées, et la clé publique correspondant à la clé de signature privée.

4. Système pour générer un certificat de clé utilisé pour une passerelle domestique selon la revendication 1, dans lequel le serveur de gestion de certificat de clé (30) comprend en outre :
un module de réception de demande (31), configuré pour recevoir les demandes à partir du terminal de gestion et du terminal d'acquisition de données ;
un module de génération de certificat de clé (32), configuré pour interagir avec la machine de chiffrement selon les demandes, pour acquérir les identifiants de la clé racine et de la clé de signature, les données de clés de passerelle domestique publique et privée, pour obtenir une clé publique racine selon un identifiant de la clé publique racine et les données de la clé publique correspondant à la clé de signature privée, pour acquérir les données signées, et pour générer le certificat racine selon la demande de génération du certificat racine et le certificat de passerelle domestique selon la demande de génération du certificat de passerelle domestique et du certificat racine ;
un module de réponse (33), configuré pour fournir le certificat racine au terminal de gestion, pour fournir la clé de passerelle domestique et le certificat de passerelle domestique, la clé publique correspondant à la clé de signature privée et les données signées au terminal d'acquisition de données ; et
un module de gestion (34), configuré pour gérer les identifiants correspondant à des clés, certificats, informations de configuration d'opérateur, permission utilisateur, et journal d'opération générés.

5. Système pour générer un certificat de clé utilisé pour une passerelle domestique selon la revendication 1, dans lequel la machine de chiffrement (40) comprend en outre :
un module de chiffrement (41), configuré pour réaliser les opérations de génération des clés et de la signature, et pour sauvegarder les clés ; et
un module d'interaction (42), configuré pour interagir avec le serveur de gestion de certificat de clé, pour renvoyer les identifiants correspondant à la clé racine et la clé de signature, et la signature au serveur de gestion de certificat de clé ;
et pour renvoyer la clé de passerelle domestique au serveur de gestion de certificat de clé directement.

6. Procédé pour générer un certificat de clé utilisé pour une passerelle domestique, le procédé comprenant les étapes de :
interaction d'un serveur de gestion de certificat de clé avec une machine de chiffrement pour générer une clé racine et un certificat racine selon une demande de génération de la clé racine et du certificat racine soumise par un terminal de gestion, et exporter le certificat racine au terminal de gestion (201) ;
interaction du serveur de gestion de certificat de clé avec la machine de chiffrement pour générer une clé de signature d'une version de logiciel pour la passerelle domestique selon une demande de génération de la clé de signature soumise par le terminal de gestion (202) ;
interaction du serveur de gestion de certificat de clé avec la machine de chiffrement pour générer des données signées de la version de logiciel selon une demande de données et d'une signature de la version de logiciel soumise par un terminal d'acquisition de données (203) ; et
interaction du serveur de gestion de certificat de clé avec la machine de chiffrement pour générer une clé de passerelle domestique et un certificat de passerelle domestique, exporter des données d'une clé publique correspondant à une clé de signature privée de la version de logiciel, et renvoyer la clé de passerelle domestique et le certificat de passerelle domestique, et les données de la clé publique au terminal d'acquisition de données, selon des données individualisées de la passerelle domestique, une demande de génération de la clé de passerelle domestique et le certificat de passerelle domestique, et une demande d'export de la clé publique correspondant à la clé de signature privée soumise par le terminal d'acquisition de données (204).

7. Procédé pour générer un certificat de clé utilisé pour une passerelle domestique selon la revendication 6, dans lequel la demande de génération de la clé racine et du certificat racine porte un identifiant d'opérateur ; et la demande de génération de la clé de signature, la demande de la signature, et la demande de génération de la clé de passerelle domestique et du certificat de passerelle domestique portent l'identifiant d'opérateur et un identifiant de région.

8. Procédé pour générer un certificat de clé utilisé pour une passerelle domestique selon la revendication 6, dans lequel le procédé comprend en outre : le renvoi de seulement des identifiants correspondant à la clé racine et la clé de signature au serveur de gestion de certificat de clé lorsque la machine de chiffrement génère la clé racine et la clé de signature.

9. Procédé pour générer un certificat de clé utilisé pour une passerelle domestique selon la revendication 6, ou 7, ou 8, dans lequel le procédé comprend en outre : la gestion par le serveur de gestion de certificat de clé d'identifiants correspondant aux clés, certificats, informations de configuration d'opérateur, permission utilisateur, et journal d'opération générés.
